(19) Europäisches Patentamt
European Patent Office
Office européen des brevets

(11) **EP 2 017 656 A1**

(12) **EUROPEAN PATENT APPLICATION**
published in accordance with Art. 153(4) EPC

(43) Date of publication:
**21.01.2009 Bulletin 2009/04**

(21) Application number: **07738565.6**

(22) Date of filing: **14.03.2007**

(51) Int Cl.:
***G02B 5/30*** *(2006.01)* ***G02F 1/13363*** *(2006.01)*

(86) International application number:
**PCT/JP2007/055095**

(87) International publication number:
**WO 2007/122916 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.04.2006 JP 2006115328**

(71) Applicants:
- **Sumitomo Chemical Company, Limited**
**Tokyo 104-8260 (JP)**
- **The University of Tokyo**
**Bunkyo-Ku,**
**Tokyo 113-0033 (JP)**

(72) Inventors:
- **YAMAHARA, Motohiro**
**Nara-shi, Nara 631-0035 (JP)**
- **HASEGAWA, Hikaru**
**Niihama-shi, Ehime 792-0802 (JP)**
- **KATO, Takashi**
**Toshima-ku, Tokyo 170-0003 (JP)**
- **MORIYAMA, Masaya**
**Oita-shi, Oita 870-0026 (JP)**

(74) Representative: **Cresswell, Thomas Anthony et al**
**J.A. KEMP & CO.**
**14 South Square**
**Gray's Inn**
**London**
**WC1R 5JJ (GB)**

(54) **OPTICAL FILM AND METHOD FOR MANUFACTURING THE SAME**

(57) This invention provides an optical film, which can freely regulate the tilt angle and can easily be manufactured without simultaneously regulating polymerization and mixing, and a method for manufacturing the same. The optical film is a film having birefringence. The film has been produced by association through an intermolecular hydrogen bond between at least two compounds having a refractive index anisotropy-providing structure and a proton-receptive group and at least one compound having a refractive index anisotropy-providing structure and a proton-providing group. The method for manufacturing the optical film comprises mixing at least two compounds having a refractive index anisotropy-providing structure and a proton-receptive group with at least one compound having a refractive index anisotropy-providing structure and a proton-providing group and forming a film from the mixture on an aligning film.

FIG.1

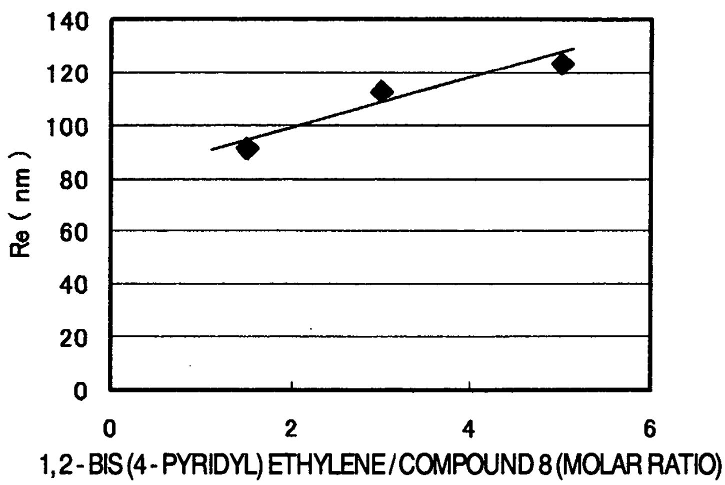


EP 2 017 656 A1

**Description**

Technical Field

The present invention relates to an optical film formed by hydrogen bonds of liquid crystal compounds.

Background Art

The liquid crystal displays (LCD) and flat panel displays (FPD) such as organic electroluminescent displays (organic EL), which require a smaller space and lower power consumption as compared with CRT, have come into popular use as display screens for computers, TV, cell phones, car navigation systems, portable information terminals, and such. A wide variety of optical compensation films are used for FPD for the purposes of prevention of reflection, enlargement of viewing angle, etc. As such compensation films, there are known, for instance, anti-reflection (AR) films made by laminating thin optical films of different refractive indices for reducing surface refractive index by the light interference effect; polarizing films which allow passage of only light in a specific direction of vibration and intercept light in other directions; phase-difference films which make optical compensation of interference colors for LCD of STN or TN system; elliptical polarizing films comprising an integral combination of a polarizing film and a phase-difference film; and viewing angle enlarging films which can enlarge the viewing angle of LCD.
There has been reported an optical film made by forming on an aligning film a non-oriented layer from a solution of a discotic liquid crystal compound having a site showing a discotic liquid crystal phase, a site providing a hydrogen bond in the molecule and a polymerizable group, and then heat treating the film layer on a 120°C metal roll for 30 seconds to thereby effect polymerization and alignment (Patent Document 1) .
In manufacturing these optical films, it needs to control polymerization and alignment at the same time, so that production of these films is in no way easy. Patent Document 1 ([0078]) also notes that the aligning film regulates the inclining direction of the liquid crystal compound, and regarding the tilt angle (optical axis inclination angle β in Patent Document 1) which is an optical characteristic of the optical films, the patent document states that the tilt angles of 15°, 20° and 30° can be obtained depending on the type of the liquid crystal compound used ([0115], [0116], [0117]), but this document is silent on the concrete method for regulating the tilt angle.

Patent Document 1: JP-A-2001-139950

Disclosure of the Invention

Problem to be Solved by the Invention

The present invention envisions to provide an optical film which can freely regulate the tilt angle and is capable of easy manufacture with no need of simultaneously regulating polymerization and alignment, and a method for manufacturing such an optical film.

Means for Solving the Problem

In the course of studies on the subject matter, the present inventors found that an optical film, not comprising a high molecular weight compound formed by a carbon-carbon bond as in the conventional films but made by associating the compounds through an intermolecular hydrogen bond, is capable of freely regulating the tilt angle by merely changing the mixing ratios of the compounds contained in the film, and that such an optical film can be obtained by only forming a mixture containing the compounds into a film. The present invention has been attained on the basis of the above finding.
Thus, the present invention provides an optical film in which at least two compounds having a refractive index anisotropy-providing structure and having a proton receptive group are associated with at least one compound having a refractive index anisotropy-providing structure and having a proton donative group through an intermolecular hydrogen bond and which has birefringence, and a method for producing an optical film comprising the steps of: mixing at least two compounds having a refractive index anisotropy-providing structure and having a proton receptive group with at least one compound having a refractive index anisotropy-providing structure and having a proton donative group; and forming a film from the resulting mixture on an aligning film.

Advantages of the Invention

The optical film of the present invention is capable of arbitrary regulation of tilt angle by merely changing the mixing ratios of the compounds used, and can be produced by a simple method which comprises forming a film from a

mixture of compounds on an aligning film. The obtained optical film excels in optical characteristics such as optical anisotropy and tilt angle.

Brief Description of the Drawings

FIG. 1 is a graph showing phase difference of the optical film produced in Film Production Example 1, wherein phase difference is plotted as ordinate, and a molar ratio of 1,2-bis(4-pyridyl)ethylene to a compound 8 is plotted as abscissa.
FIG. 2 is a graph showing tilt angle of the optical film produced in Film Production Example 1, wherein tilt angle is plotted as ordinate, and a molar ratio of 1,2-bis(4-pyridyl)ethylene to a compound 8 is plotted as abscissa.
FIG. 3 is a graph showing phase difference of the optical film produced in Film Production Example 2.
FIG. 4 is a graph showing tilt angle of the optical film produced in Film Production Example 2.
FIG. 5 is a graph showing phase difference of the optical film produced in Film Production Example 3.
FIG. 6 is a graph showing tilt angle of the optical film produced in Film Production Example 3.
FIG. 7 is a graph showing the interrelation between the 1,2-bis(4-pyridyl)ethylene/compound (8, 9 and 10) molar ratio and the phase difference of the optical film provided when the said molar ratio is changed.
FIG. 8 is a graph showing the interrelation between the 1,2-bis(4-pyridyl)ethylene/compound (8, 9 and 10) molar ratio and the tilt angle of the optical film provided when the said molar ratio is changed.
FIG. 9 is a schematic illustration of an index ellipsoid in the film in an embodiment of the present invention.
FIG. 10 is a schematic illustration of a section of a liquid crystal display device in an embodiment of the present invention.
FIG. 11 is a schematic illustration of a section of an organic electro-luminescent display device in an embodiment of the present invention.

Best Mode for Carrying out the Invention

A detailed description of the present invention will be given below.
The compounds having a refractive index anisotropy-providing structure and having a proton receptive (accepting) group (s) usable in the present invention are the compounds in which usually 1 to 6 proton receptive groups are bonded to the refractive index anisotropy-providing structure.
The refractive index anisotropy-providing structure in the "compounds having a refractive index anisotropy-providing structure and a proton receptive group(s)" may be single or plural, and in the latter case, the structures may be identical or different from each other. Also, the above-mentioned "refractive index anisotropy-providing structure" may be identical with or different from the "refractive index anisotropy-providing structure" in the later-mentioned "compound having a refractive index anisotropy-providing structure and a proton donative group(s)."
The refractive index anisotropy-providing structure in the present invention is also called mesogene group, and it may typically be a rod-like structure or a disc-like structure. The "rod-like structure" mentioned here is a structure having at least two main parts comprising at least one kind of ring selected from the group consisting of benzene ring, six-membered heterocyclic ring and trans-substituted cyclohexane ring, with the main parts in the structure being bonded directly or through one of the following connecting groups:

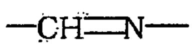 , 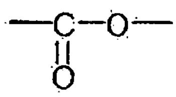 , 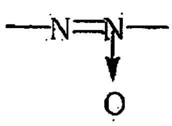 ,

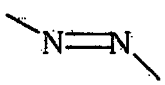 , 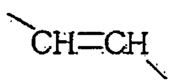 , 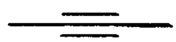 ,

Examples of the rod-like structure include the structures derived from mesogene groups such as, for example, the structure derived from azomethines, the structure derived from azoxies, the structure derived from cyanobiphenyls, the structure derived from cyanophenyl esters, the structure derived from cyclohexanecarboxylic acid phenyl esters, the

strucdture derived from cyanophenylcyclohexanes, the structure derived from phenyldioxanes, and the structure derived from tolans.

The "disc-like structure" is a structure which is different from the rod-like structure and is of the type that provides a laminate of such structures after association. Examples of such disc-like structure includes those represented by the following formulae:

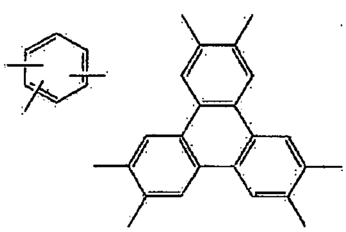
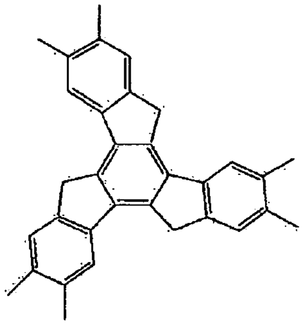
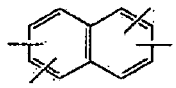
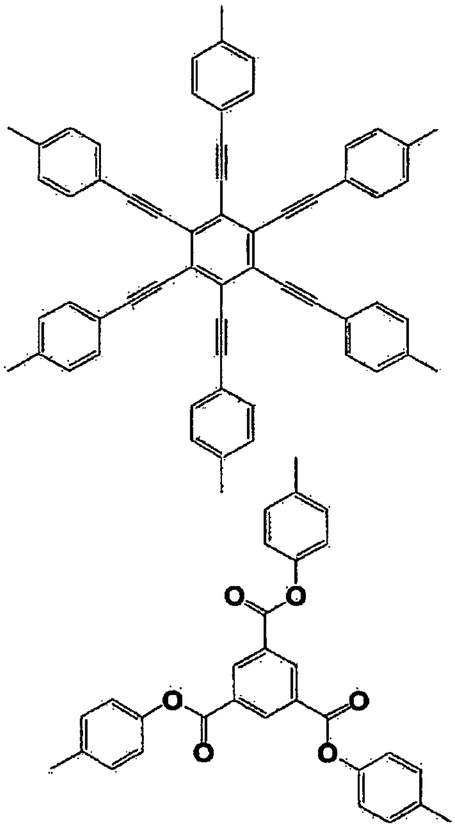
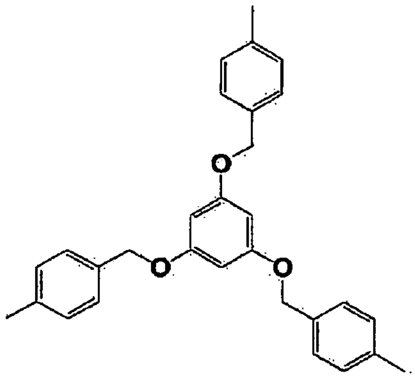
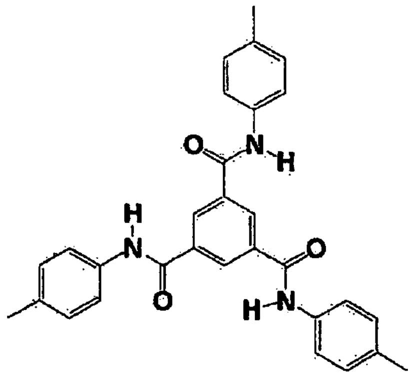

The said disc-shaped structure may be a structure in which part of the composing carbon atoms are substituted with nitrogen atom, oxygen atom or the like, and the refractive index anisotropy-providing structure includes a proton receptive group(s)and/or a proton donative group(s).

Examples of the compounds having a refractive index anisotropy-providing structure and a proton receptive group(s) include the compounds represented by the following formulae (1) and (2). More specific examples of such compounds are 4,4'-dipyridyl of the formula (2) in which p = 0 and n = 0 (compound having a rod-like structure and a proton receptive group), 1,2-bis(4-pyridyl)ethane of the formula (2) in which p = 0 and (R')n = $-CH_2CH_2-$ (compound having a disc-like structure and a proton receptive group), 1,2-di(4-pyridyl)ethylene of the formula (2) in which (R')n is

- CH=CH- (compound having a rod-like structure and a proton receptive group), and the compounds represented by the following formula (3) (compounds having a rod-like or disc-like structure and a proton receptive group). The compounds represented by the formula (3) are the representative examples of the compounds having a rod-like or disc-like structure and one proton receptive group in the molecule.

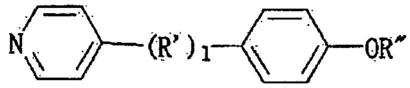

(1)

,

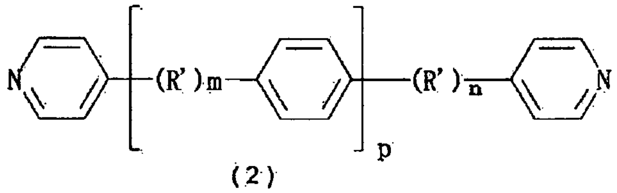

(2)

(In the above formulae, R' is a $C_1$-$C_{12}$ divalent hydrocarbon group, -O-$(CH_2CH_2O)_q$-$CH_2$-, -O-$CH(CH_3)$-$CH_2$-O-$CH_2$- or -C(=O)-O-; R" is a $C_6$-$C_{12}$ alkyl group; p, q, 1, m and n are a number of 0 to 12.)

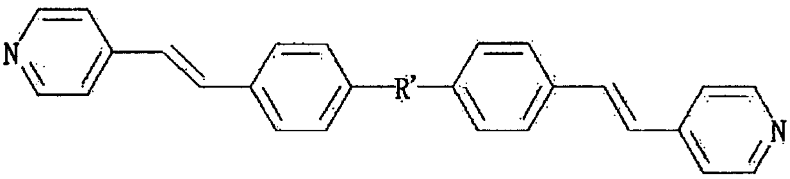

(3)

(In the formula (3), R' has the same meaning as defined above.)

The proton receptive group is a 5- or 6-membered heterocyclic ring containing a tertiary amino group (≡N), a carbonyl group or a nitrogen atom. The 5- or 6-membered heterocyclic ring containing a nitrogen atom may have a $C_1$-$C_{12}$ alkyl group, a $C_1$-$C_{12}$ alkenyl group or a $C_1$-$C_{12}$ alkynyl group. Also, the 5-or 6-membered heterocyclic ring containing a nitrogen atom may be condensed with other 5- or 6-membered heterocyclic ring containing a nitrogen atom. The 5- or 6-membered heterocyclic ring containing a nitrogen atom may also be condensed with a 5- or 6-membered aromatic hydrocarbon ring or a 5- or 6-membered aromatic heterocyclic ring. Typical examples of such rings are imidazole ring, quinoline ring and isoquinoline ring.

The 5- or 6-membered heterocyclic ring containing a nitrogen atom is preferably an aromatic heterocyclic ring containing 1 or 2 nitrogen atoms. Examples thereof include pyridine ring, pyrimidine ring, pyridazine ring, pyrazine ring, pyrrole ring, pyrazole ring, azacyclopentane ring, azacyclohexane ring, diazacyclopentane ring, diazacyclohexane ring, and the rings represented by the following formulae:

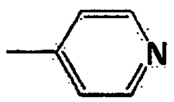

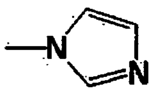

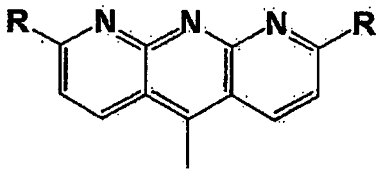

(In the above formulae, R is an alkyl or phenyl group having approximately 1 to 12 carbon atoms.)

The proton receptive group is preferably linked to the refractive index anisotropy-providing structure. This proton receptive group may also be bonded to other proton receptive group, hydrogen atom, alkyl groups having approximately 1 to 12 carbon atoms such as methyl group, phenyl group, or a proton donative group such as mentioned later.
Further, the proton receptive group may be bonded to the refractive index anisotropy-providing structure through a connecting group.
The connecting group may be, for example, a divalent hydrocarbon group having approximately 1 to 24 carbon atoms, such as alkylene group or a phenylene group. The carbon atom in the said hydrocarbon group may be substituted with a hetero-atom such as oxygen atom or sulfur atom.

In the present invention, there are used at least two compounds having a refractive index anisotropy-providing structure and a proton receptive group(s). One of these compounds is a compound having one proton receptive group in the molecule, and the other is a compound having plural proton receptive groups in the molecule.
With the film of the present invention, it is possible to regulate the tilt angle by merely changing the mixing ratios of the said compounds. Usually, the more the mixing ratio of the compound having one proton receptive group in the molecule

is increased, the less the phase difference and the greater the tilt angle tend to become, so that it is possible to regulate the phase difference and tilt angle of the obtained optical film by varying the mixing ratio of the compound having one proton receptive group in the molecule.

This point is discussed more closely. In the present invention, the ratio of the compound having one proton receptive group in the molecule is in the range from 0.1 to 50 parts by weight, preferably from 5 to 40 parts by weight, to total 100 parts by weight of the compounds having a structure polarized to provide refractive index anisotropy and a proton receptive group(s). If the ratio of the compound having one proton receptive group in the molecule is not less than 0.1 part by weight, there arises a tendency for the tilt angle to enlarge, and if the said ratio is not higher than 50 parts by weight, the liquid crystal properties tend to better.

In case the compound having one proton receptive group in the molecule is a compound represented by the formula (1), there is a tendency for the phase difference to enlarge proportionally to the number of carbon atoms of the alkyl group represented by R", so that it is possible to adjust the phase difference by selecting the compound of the formula (1) .

The compounds having a refractive index anisotropy-providing structure and a proton donative group(s) used in the present invention are the compounds in which usually 1 to 6, preferably 2 to 6 proton donative groups are bonded to the refractive index anisotropy-providing structure.

The "proton donative group" is a group having hydrogen bondable proton, such as hydroxyl group, thiol group, primary amino group ($-NH_2$) and secondary amino group (-NH-).

Hydroxyl group and secondary amino group (-NH-) are preferred as they help form strong intermolecular hydrogen bonds.

The refractive index anisotropy-providing structure contained in the compounds having the said refractive index anisotropy-providing structure and a proton donative group(s) in the molecule may be identical with the afore-mentioned refractive index anisotropy-providing structure contained in the molecule having a proton receptive group.

Examples of the compounds having a refractive index anisotropy-providing structure and a proton donative group(s) include those represented by the following formula:

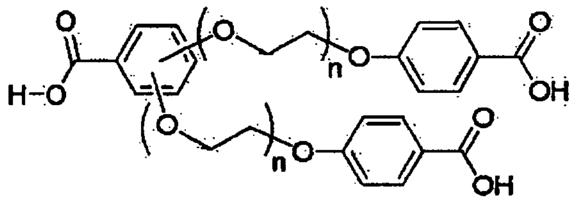

wherein n is a number of around 0 to 6, preferably around 1 to 4.

The compounds used in the present invention may have a group containing a proton receptive group and a proton donative group. Exemplary of such groups are carboxyl groups (-COOH), amide groups (-CO-NH-), isocyanate groups (-N=C=O), urea structure (-N(H)-C(=O)-N(H)-), and the compounds having the structures shown below.

The carboxyl groups (-COOH) have a proton donative hydroxyl group (-OH) and a proton receptive carbonyl group (=C=O). The amide groups (-CO-NH-), isocyanate groups (-N=C=O) and urea structure (-N(H)-C(=O)-N(H)-) have a proton donative primary amino group (-NH-) and a proton receptive carbonyl group (=C=O).

More concrete examples of the groups having a proton receptive group and a proton donative group are those represented by the following formulae:

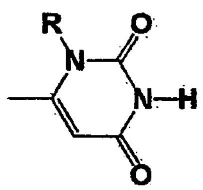
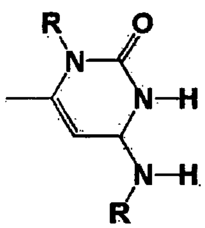
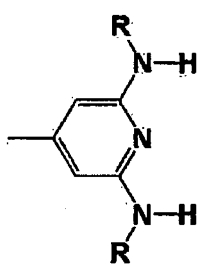
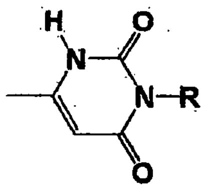

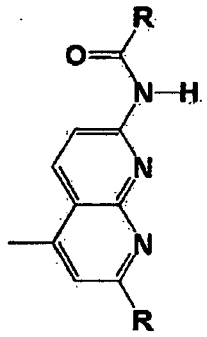

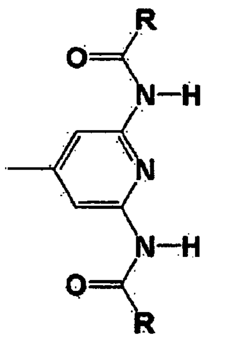

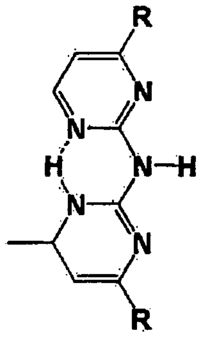

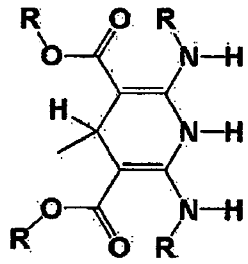

The compounds used in the present invention preferably have no polymerizable group in the molecule for the reason that if they have a polymerizable group such as vinyl groups, (meta)acryloyl groups, epoxy groups and isocyanate groups, polymerization may take place to cause a change of structure, which may impair association through intermolecular hydrogen bond.

The optical film of the present invention is formed by association through an intermolecular hydrogen bond between at least two compounds having a refractive index anisotropy-providing structure and a proton receptive group and at least one compound having a refractive index anisotropy-providing structure and a proton donative group. "Intermolecular hydrogen bond" is different from intramolecular hydrogen bond and means hydrogen bond of the type in which if the hydrogen bond participating in association is cut, it is divided into two or more molecules. In the film of the present invention, such intermolecular hydrogen bond may be formed one or in plurality. At the molecular level, there may be formed one or more intermolecular hydrogen bonds between a certain compound and another compound. Also, there may further be formed one or more intermolecular hydrogen bonds between the said certain compound and still another compound. In the presented embodiments of the present invention, there are formed the intermolecular hydrogen bonds such as shown by the following formulae:

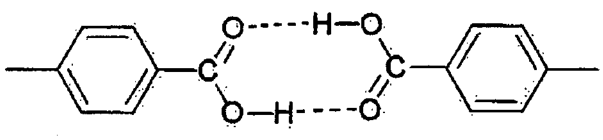

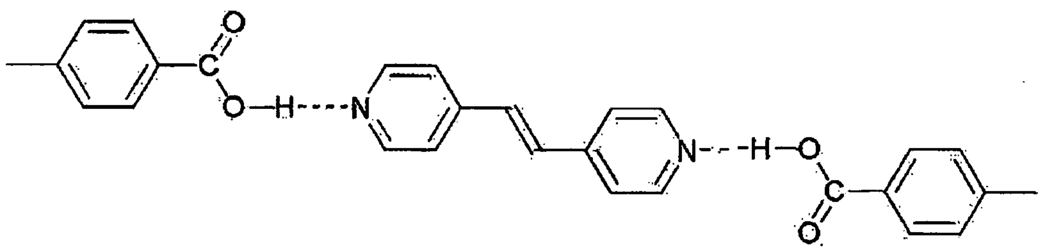

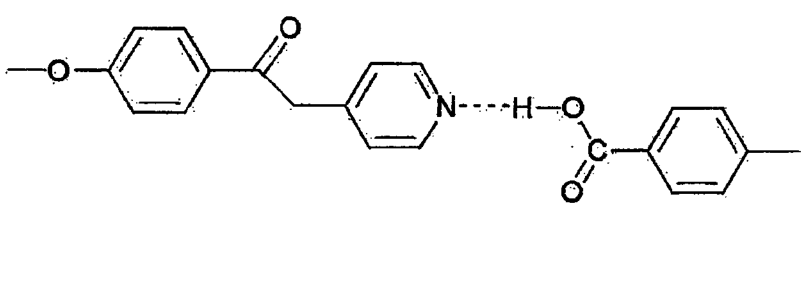

In the case of intramolecular hydrogen bond, for instance the hydrogen atom of a proton donative group forms a six-membered ring structure with a proton receptive group as shown by the following formula:

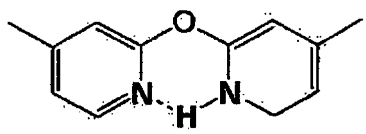

In an embodiment of the present invention, since the film is formed by intermolecular hydrogen bond, the ratio (HA/HD) of the total number (HA) of the proton receptive groups contained in the compounds composing the film to the total number (HD) of the proton donative groups contained in the compounds composing the film is usually around 1 to about 10, preferably around 3 to 7.

The method for producing the film according to the present invention comprises, for instance, mixing at least two compounds having a refractive index anisotropy-providing structure and a proton receptive group with at least one compound having a refractive index anisotropy-providing structure and a proton donative group, and forming a film from the mixture on an aligning film. In the film forming process, the solvent is evaporated away, association takes place between the compounds through the intermolecular hydrogen bonds, and the mixture is formed into a film on an aligning film, so that the obtained film is aligned and provided with birefringence.

The more specific film producing methods of the present invention include, for instance, a method in which a solution containing the said mixture is cast onto an aligning film and then the solvent is removed preceding the formation of the film, and a method in which the solvent is removed (almost entirely) from the solution containing the said compounds and the formed aggregate is molded into a film by melting, extrusion or other means on an aligning film. Also, the film of the present invention may be a multi-layered product of different aggregates.

Particularly the method comprising casting a solution containing the said mixture onto an aligning film and then removing the solvent followed by forming a film is advantageous as this method is very simple and capable of forming a film at a low temperature.

As the aligning film, it is possible to use, for instance, a film made of a soluble polyimide, a polyimide formed by imidizing a poly(amic) acid by heating it at 100-200°C, or an alkyl chain-modified polyvinyl alcohol, a film made of gelatin or the like and subjected to rubbing with a nylon or other cloth, and a photosensitive polyimide film subjected to a polarized UV treatment.

A commercially available aligning film may be used in the form as it is.

Examples of the commercially available aligning films are SUNEVER (registered trademark, mfd. by Nissan Chemicals Co., Ltd.) and OPTOMER (registered trademark, mfd. by JSR), which are the photosensitive polyimide films subjected to a polarized UV treatment, and POVAL (registered trademark, mfd. by Kurarey Ltd.) using a modified polyvinyl alcohol as base material.

As the solvent for dissolving the said mixture, there can be used, for instance, alcohols such as methanol and isopropyl alcohol; ethers such as ethylene glycol dimethyl ether, propylene glycol dimethyl ether and tetrahydrofuran; esters such as $\gamma$-butyrolactone, ethyl acetate, butyl acetate, ethylene glycol diacetate and propylene glycol diacetate; ketones such as acetone, methyl ethyl ketone and methyl isobutyl ketone; aromatic hydrocarbons such as toluene and xylene; N-methyl-2-pyrrolidone, pyridine, and N,N-dimethylformamide.

These solvents may be used either singly or as a mixture of two or more of them.

As for the amount of the solvent to be used, it is sufficient to use in an amount which is capable of dissolving the said mixture, specifically an amount that can prepare a 1-50 wt% solution of the said mixture.

The viscosity of the prepared solution is preferably of a degree sufficient to allow formation of an intermolecular hydrogen bond and to provide a smooth surface, which is usually not higher than 10 mPa·s, preferably in the range of around 0.1 to 5 mPa·s.

The methods available for removing the solvent include air drying, draft drying, and vacuum drying.

For forming the film, there can be used, for instance, a method in which the aggregate obtained by removing the solvent from the mixture is made into a film, for which various coating methods such as extrusion coating, direct gravure coating, reverse gravure coating, CAP coating and die coating can be employed. It is also possible to initially coat the base film with the solution by a coater such as dip coater, bar coater or spin coater, then remove the solvent and form a film.

The thus obtained film has birefringence. Birefringence may be represented by, for instance, tilt angle or retardation (phase difference).

Birefringence is reviewed here with reference to FIG. 9. The three-dimensional principal indices of refraction na, nb, nc

are defined in an index ellipsoid 22 which shows the optical characteristics of the film 21 of the present invention. The angle made by the Z-axis and the principal refraction index nc is defined as tilt angle. Also defined are the longer axis ny and the shorter axis nx of the vertical ellipsoid 24 described on the film when it is seen in the Z direction, and the product (ny - nx) · d of the difference between ny and nx and the film thickness d is defined as retardation.
Retardation may be determined by, for instance, ellipsometry. For determination of the tilt angle, there may be used, for instance, a method in which the incident angle dependency of light is measured in the determination of retardation, and the tilt angle is calculated from curve fitting based on the calculations of the variation of retardation of the ideal index ellipsoid due to incident angle dependency.
Retardation is usually on the order of 5 to 700 nm, preferably 50 to 400 nm.

The film of the present invention normally has liquid crystal characteristics, and to be specific, it takes a form of thermotropic liquid crystal.

When an aggregate obtained through intermolecular association of the compounds having a refractive index anisotropy-providing structure and a proton receptive group and/or a proton donative group in the molecule is melted on an aligning film, the said aggregate is usually brought into an isotropic state, and on successive cooling, it sometimes takes a nematic phase. The film obtained after cooled into a nematic phase from anisotropic state is provided with a reverse wavelength dispersion characteristic.

It is possible with the film having such a reverse wavelength dispersion characteristic to optionally set retardation by changing the film thickness. That is, since retardation Re is given by the equation:

$$Re = d \cdot \Delta n$$

wherein $\Delta n$ is refractive index anisotropy of the film and d is film thickness, it is possible to regulate retardation Re by adjusting film thickness d.

The film of the present invention, beside its use as an optical compensation film, finds many other uses such as anti-reflection film, phase difference film and viewing angle enlarging film.
It can be also used as a component of the flat panel display devices (FDP) by combining it with a film or films having other optical characteristics. Specifically, its uses include elliptical polarizing film made by attaching the optical compensation film of the present invention to a polarizing film, and wide-band circular polarizing plate having the wide-band λ/4 plates additionally bonded to said elliptical polarizing film.

The film having birefringence according to the present invention finds useful application as a member of liquid crystal display devices (LCD) and flat panel display devices such as organic EL displays. Generally, the liquid crystal display devices comprise the electrodes, two transparent substrates having an aligning film formed thereon, and liquid crystal held between the said transparent substrates. The liquid crystal molecules are driven by applying a voltage across a pair of electrodes to produce an optical shutter effect. Preferably a polarizing film or a polarizing plate is attached to the transparent substrates. In an embodiment of the present invention, the optical film of the present invention is used as the polarizing film or the polarizing plate in the liquid crystal display devices.

The display devices, for instance the organic EL display devices comprise a transparent substrate, a first electrode covering the transparent substrate, a second electrode, at least one light-emitting layer disposed between the first and second electrodes, and a polarizing plate, preferably a wide-band circular polarizing plate covering the transparent substrate on the side opposite from the first electrode. In an embodiment of the present invention, the optical film of the present invention is used for the polarizing plate, preferably wide-band circular polarizing plate, in the organic EL display devices. The second electrode is usually made of gold, silver, aluminum, platinum or an alloy containing such a metal.

## EXAMPLES

The present invention is described in further detail below with reference to the embodiments thereof, but the present invention is not defined by these embodiments in any way.

[Production Example 1 of tribenzoic acid derivative]

2-(2-chloroethoxy)ethanol (1, 0.18 mol), ethyl 4-hydroxybenzoate (2, 0.12 mol) and potassium carbonate (0.24 mol) were dissolved in N,N-dimethylformamide (DMF) by stirring at 120°C for 10 hours to obtain ethyl 4-(2-(2-hydroxyethoxy)-ethoxy)benzoate 3, which was then tosylated in the usual way to give a compound 4 in a yield of 56%.
Then compound 4 (36.7 mmol), 2,5-hydroxybenzoic acid (18.4 mmol) and cesium carbonate (55.1 mmol) were dissolved in DMF of 25°C by stirring for 2 days to obtain a compound 5, and finally this compound was alkali hydrolyzed to obtain

a tribenzoic acid derivative 6 (yield from the compound 4: 61%) which is a compound having OH groups, which are proton donative groups, and benzene rings which are a disc-like structure. The melting point of the obtained derivative was 203°C. This tribenzoic acid derivative 6 is a compound having 3 OH groups in the molecule and benzene rings as a refractive index anisotropy-providing structure.

$^1$H NMR (DMSO-$d_6$, 27°C, ppm) δ of the tribenzoic acid derivative 6: 7.86 (d, 4ArH, H-5), 7.16 (s, 1ArH, H-1), 7.05 (m, 2ArH, H-2, H-3), 7.01 (d, 4ArH, H-4), 4.19-4.06 (m, 8H, $-CH_2CH_2OAr$), 3.85-3.77 (m, 8H, $-CH_2CH_2OAr$)
$^{13}$C NMR (DMSO-$d_6$, 27°C, ppm) δ of the tribenzoic acid derivative 6: 167.2 (-COOH), 162.1, 131.4, 123.1, 114.3 (ArC, $-C_6H_4COOH$), 152.3, 147.7, 123.6, 123.3, 114.4, 112.8 (ArC, 4th and 5th positions of the benzene ring), 69.0 ($-OCH_2CH_2OCH_2CH_2O-$), 68.5, 68.3, 67.5 ($-OCH_2CH_2OAr$)

[Production Example 2 of tribenzoic acid derivative]

The same procedure as defined in Production Example 1 of tribenzoic acid derivative was conducted except for use of 3,4-hydroxybenzoic acid in place of 2,5-hydroxybenzoic acid to obtain a tribenzoic acid derivative 7 in a yield of 61% from the compound 4. Melting point: 203°C.

$^1$H NMR (DMSO-$d_6$, 27°C, ppm) δ of tribenzoic acid derivative 7: 7.85 (d, 4ArH, H-4, J = 8, 4Hz), 7.53 (d, 1ArH, H-1, J = 8.5Hz), 7.47 (s, 1Ar, H-3), 7.06 (d, 1ArH, H-2, J = 8.5Hz), 6.97 (D, 4ArH, H-5, J = 8.4Hz), 4.14 (m, 8H, $-CH_2CH_2OAr$), 3.82 (m, 8H, $- CH_2CH_2OCH_2CH_2-$)
$^{13}$C NMR (DMSO-$d_6$, 27°C, ppm) δ of tribenzoic acid derivative 7: 167.2 (-COOH), 162.1, 131.4, 123.1, 114.3 (ArC, $-C_6H_4COOH$), 152.3, 147.7, 123.6, 123.3, 114.4, 112.8 (ArC, 4th and 5th positions of benzene ring), 69.0 ($-OCH_2CH_2OCH_2CH_2O-$), 68.5, 68.3, 67.5 ($-OCH_2CH_2OAr$)

[Production Example 1]

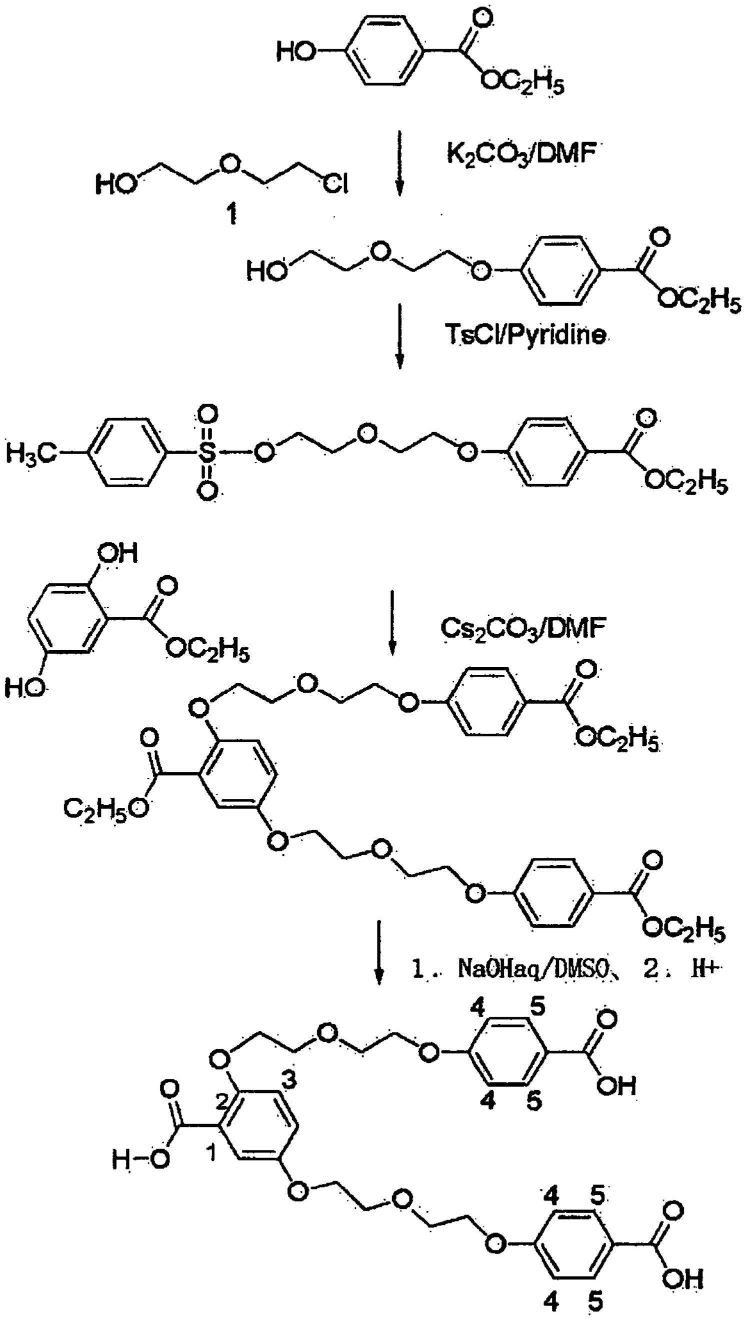


1

2

3

4

5

6

[Production Example 2]

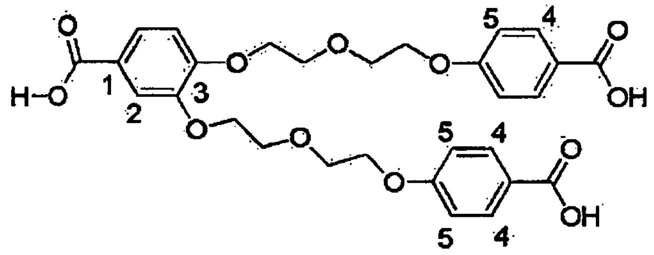

7

[Production Example 1 of compound 8 having a refractive index anisotropy-providing structure and one proton receptive group in the molecule]

After nitrogen replacement of the interior of a vessel containing 4.7 g (16.5 mmol) of 4-decanoyloxybenzoic acid, this benzoic acid was dissolved in chloroform, followed by the addition of 1.9 ml (22.5 mmol) of oxalyl dichloride and 0.12 ml (1.5 mmol) of N,N-dimethylformamide, and the mixture was stirred at room temperature for 2 hours. After evaporating away the solvent and excess oxalyl dichloride under reduced pressure, the mixture was again dissolved in chloroform. This solution was added with stirring into a vessel containing 1.5 g (15.0 mmol) of 4-hydroxypyridine and 15.0 ml of chloroform, after which 6.4 ml (37.5 mmol) of diisopropylethylamine was added dropwise and the mixture was further stirred at room temperature for 2 hours. This reaction solution was washed with water, the solvent was evaporated away, and the resulting crude product was separated and purified by a silica gel column to obtain 84.3 g (11.5 mmol) of a compound 8 in the form of white crystals. The yield was 77% base on 4-hydroxypyridine.

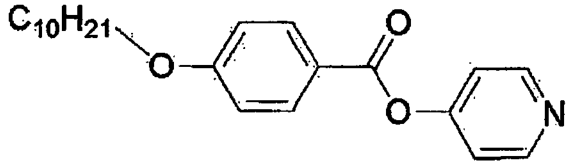

(8)

$^1$H NMR ($CDCl_3$, ppm) δ of compound 8: 0.96 (3H, t), 1.29 (14H, m), 1.71 (2H, m), 3.94 (2H, t), 6.98 (2H, m), 7.27 (2H, m), 8.02 (2H, m), 8.66 (2H, m)

[Production Example 2 of compound 9 having a refractive index anisotropy-providing structure and one proton receptive group in the molecule]

A compound 9 was obtained by following the same procedure as conducted in [Production Example 1 of compound 8 having a refractive index anisotropy-providing structure and one proton receptive group in the molecule] except for use of 4-nonyloxybenzoic acid in lieu of 4-decanoyloxybenzoic acid. The yield was 99% based on 4-hydroxypyridine.

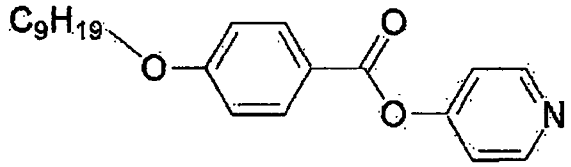

(9)

$^1$H NMR ($CDCl_3$, ppm) δ of compound 9: 0.96 (3H, t), 1.29 (12H, m), 1.71 (2H, m), 3.94 (2H, t), 6.98 (2H, m), 7.27 (2H, m), 8.02 (2H, m), 8.66 (2H, m)

[Production Example 3 of compound 10 having a refractive index anisotropy-providing structure and one proton receptive group in the molecule]

A compound 10 was obtained by following the same procedure as carried out in [Production Example 1 of compound 7 having a structure polarized to provide refractive index anisotropy and one proton receptive group in the molecule] except for use of 4-hyxyloxybenzoic acid in lieu of 4-decanoyloxybenzoic acid. The yield was 64% based on 4-hydroxypyridine.

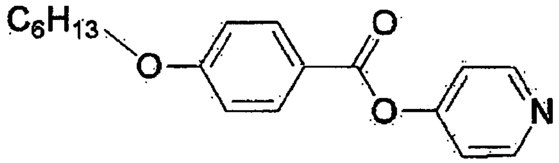

**(10)**

$^1H$ NMR ($CDCl_3$, ppm) δ of compound 10: 0.96 (3H, t), 1.29 (10H, m), 1.71 (2H, m), 3.94 (2H, t), 6.98 (2H, m), 7.27 (2H, m), 8.02 (2H, m), 8.66 (2H, m)

[Film Production Example 1]

Vinyl alcohol was coated on a glass substrate, then dried and annealed to form a 100 nm film, and this film was subjected to rubbing to make an aligning film. Next, compound 7 and 1,2-bis(4-pyridyl)ethylene (produced by Aldrich Co., Ltd., melting point: 152°C) were mixed at a molar ratio of 2 : 3, whilst compound 8 and 1,2-bis(4-pyridyl)ethylene were mixed at a molar ratio of 1 : 5, 1 : 3 or 1 : 1.5 to prepare the respective N,N-dimethylacetamide solutions (23 wt%). Each of these solutions was spin coated on the aligning film and dried at 60°C for 5 minute to produce an optical film.
When the obtained film was held by the polarizing plates (SUMICALAN SR1862A, registered trademark, mfd. by Sumitomo Chemical Co., Ltd.) in a state of crossed nicols and rotated, there was noted the presence of an extinction axis, which confirmed that this film had birefringence.
The phase difference (Re) and tilt angle (β) of the obtained optical films at a wavelength of 585.6 nm in the frontal direction were measured by a measuring instrument (COBRA-WR mfd. by Ohji Measuring Instruments Co., Ltd., obtaining the results shown in Table 1.

[Table 1]

| Molar ratio (HA/HD) | Optical characteristics | |
|---|---|---|
| 1,2-bis(4-pyridyl)ethylene/compound 8 | Re [nm] | β |
| 5 (27/6) | 123.0 | 13.6 |
| 3 (21/6) | 112.6 | 21.5 |
| 1.5 (16.5/6) | 91.3 | 34.5 |

Graphing the interrelation between the optical characteristics and the 1,2-bis(4-pyridyl)ethylene/compound 8 molar ratio, it was found that the more the amount of the compound 8 mixed is increased, the less the phase difference becomes (FIG. 1) and the more the tilt angle is enlarged (FIG. 2).

[Film Production Example 2]

The optical films were produced by following the same procedure as defined in Film Production Example 1 except for use of compound 9 in lieu of compound 8 and selection of the compound 9/1,2-bis(4-pyridyl)ethylene molar ratios shown in Table 2. The phase difference (Re) and tilt angle (β) of the obtained films at a wavelength of 585.6 nm in the frontal direction were also measured in the same way as in [Film Production Example 1], the results being shown in Table 2.

[Table 2]

| Molar ratio (HA/HD) | Optical characteristics | |
|---|---|---|
| 1,2-bis(4-pyridyl)ethylene/compound 9 | Re [nm] | β |
| 7 (33/6) | 136.1 | 6.5 |
| 3.3 (21.9/6) | 120.6 | 19.5 |
| 1.4 (16.2/6) | 102.9 | 36.7 |

Graphing the interrelation between the optical characteristics and the 1,2-bis(4-pyridyl)ethylene/compound 9 molar ratio, it was disclosed that the more the amount of compound 9 mixed is increased, the less the phase difference becomes (FIG. 3) and the more the tilt angle is enlarged (FIG. 4).

[Film Production Example 3]

The optical films were produced by following the same procedure as conducted in Film Production Example 1 except for use of compound 10 in place of compound 8 and selection of the compound 10/1,2-bis(4-pyridyl)ethylene molar ratios shown in Table 3. The phase difference (Re) and tilt angle (β) of the obtained films at a wavelength of 585.6 nm in the frontal direction were also measured in the same way as in Film Production Example 1, with the results being shown in Table 3.

[Table 3]

| Molar ratio (HA/HD) | Optical characteristics | |
|---|---|---|
| 1,2-bis(4-pyridyl)ethylene/compound 10 | Re [nm] | β |
| 7 (33/6) | 135.0 | 4.8 |
| 3.3 (21.9/6) | 131.0 | 22.2 |
| 1.4 (16.2/6) | 110.4 | 33.5 |

Graphing the interrelation between the optical characteristics and the 1,2-bis(4-pyridyl)ethylene/compound 10 molar ratio, it was found that the more the amount of compound 10 mixed is increased, the less the phase difference becomes (FIG. 5) and the more the tilt angle is enlarged (FIG. 6).

Plotting the interrelation between the ratio of 1,2-bis(4-pyridyl)ethylene to the compound (8, 9 or 10) having a refractive index anisotropy-providing structure and one proton receptive group in the molecule and the phase difference of the obtained film, based on the results of Film Production Examples 1 to 3, there is observed a tendency for the phase difference to become greater (FIG. 7) and a tendency for the tilt angle to lessen (FIG. 8) with the increase of carbon number in the side chain (R").

<Liquid crystal display device production example>

The upper and lower polarizing plates of a 17-in. liquid crystal television (LT17N23WB mfd. by Samsung Co., Ltd.) were stripped off by half of their surface area, and the obtained elliptical polarizing plates (A-plate and C-plate) were bonded as shown in FIG. 10.

The liquid crystal display device is provided with a liquid crystal panel 3 having the first and second faces which are substantially parallel to each other, an A-plate 2 secured to the first face with an adhesive, a polarizing film 1 secured to the A-plate 2 on the side opposite from the first face, a C-plate 4 secured to the second face with an adhesive, and a polarizing film 5 secured to the C-plate 4 on the side opposite from the second face. The film obtained in Production Example 1 or 2 is used as the polarizing film 1 and polarizing film 5.

Comparing the above liquid crystal television product with the example of this invention with respect to viewing angle characteristic, it is found that there can be obtained the similar viewing angle characteristic in both cases.

<Organic EL display device production example>

An organic electroluminescent element illustrated in FIG. 11 is made according to the following procedure. First, an indium tin oxide (ITO) layer is formed as an electrode 15, which is to serve as an anode, on the surface of a glass substrate 14. Then a hole transport layer 16 is formed on the ITO layer. Specifically, a mixture of polyethylene dioxithiophene and sodium polystyrenesulfonate is spin coated on the ITO layer at room temperature. Further, a light emitting layer 17 is formed on the surface of the hole transport layer 16. This light emitting layer is formed by spin coating at room temperature a THF solution prepared by mixing Alq3 in polyvinylcarbazole. An Al/Li (9:1) alloy is deposited on the surface of the light emitting layer 17 to form an electrode 18 which serves as a cathode. Then these layers are sealed 19 with a polyimide so as to cover the surface of the glass substrate 14, the side of the anode 15, the side of the hole transport layer 16, the side of the light emitting layer 17, and the surface and the side of the cathode 18.
On the other hand, a 1/4 wave plate 13 is provided on the surface of the glass substrate 11 with the medium of an adhesive, then a 1/2 wave plate 12 is provided on the surface of the 1/4 wave plate 13 with the medium of an adhesive, and further a polarizing film 11 is provided on the surface of the 1/2 wave plate 12 with the medium of an adhesive. The said wave plate is a birefringent element which functions to generate a phase difference between S polarized light and P polarized light when light is passed through the plate. The film produced in Production Example 1 or 2 is used as the 1/4 wave plate, whereby good black display and green light emission can be confirmed.

Industrial Applicability

According to the present invention, it is possible to regulate, by a simple method, the optical characteristics of the optical films such as antireflection (AR) film, polarizing film, phase difference film and viewing angle enlarging film. Subjecting the aligning film to an alignment treatment designed to provide the desired optical characteristics, the produced optical film is capable of regulating alignment of the polymerizable compounds, and the desired optical characteristics can be regulated by a simple method. Also, the optical film of the present invention can be used for the liquid crystal display devices (LCD) and flat panel display devices such as organic electroluminescent displays.

## Claims

**1.** An optical film in which at least two compounds having a refractive index anisotropy-providing structure and having a proton receptive group are associated with at least one compound having a refractive index anisotropy-providing structure and having a proton donative group through an intermolecular hydrogen bond and which has birefringence.

**2.** An optical film according to Claim 1, wherein one of the at least two compounds having a refractive index anisotropy-providing structure and having a proton receptive group is a compound having one proton receptive group in the molecule, and the other of the at least two compounds is a compound having plural proton receptive groups in the molecule.

**3.** An optical film according to Claim 1 or 2, wherein the ratio (HA/HD) of the total number (HA) of the proton receptive groups contained in the compounds constituting the optical film to the total number (HD) of the proton donative groups contained in the compounds constituting the optical film is 3 to 7.

**4.** An optical film according to any one of Claims 1 to 3, wherein said film has a reverse wavelength dispersing property.

**5.** An optical film according to any one of Claims 1 to 4, wherein said film has a liquid crystal phase.

**6.** An optical film according to any one of Claims 1 to 5, wherein said proton receptive group is at least one group selected from the group consisting of tertiary amino group (≡ N), carbonyl group, and 5- or 6-membered heterocyclic ring containing 1 to 2 nitrogen atoms (wherein said heterocyclic ring can be substituted with a $C_1$-$C_{12}$ alkyl group, a $C_1$-$C_{12}$ alkenyl group, a $C_1$-$C_{12}$ alkynyl group, or a 5- or 6-membered ring, or can be condensed with other ring).

**7.** An optical film according to any one of Claims 1 to 6, wherein the proton donative group is at least one group selected from the group consisting of hydroxyl group, thiol group, primary amino group ($-NH_2$) and secondary amino group (-NH-).

**8.** An optical film according to any one of Claims 1 to 7, wherein the refractive index anisotropy-providing structure is a rod-like structure or a disc-like structure.

**9.** An optical film according to any one of Claims 1 to 8, which is an optical compensation film.

**10.** A flat panel display device comprising the film set forth in any one of claims 1 to 9.

**11.** A method for producing an optical film, comprising the steps of:

mixing at least two compounds having a refractive index anisotropy-providing structure and having a proton receptive group with at least one compound having a refractive index anisotropy-providing structure and having a proton donative group; and
forming a film from the resulting mixture on an aligning film.

**12.** A method for producing an optical film according to Claim 11, wherein the film is formed by casting a solution containing the said mixture and then removing a solvent.

FIG.1

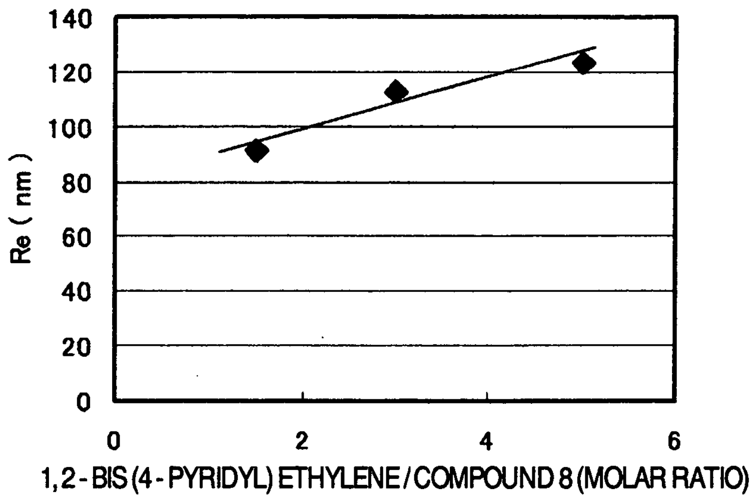


FIG.2

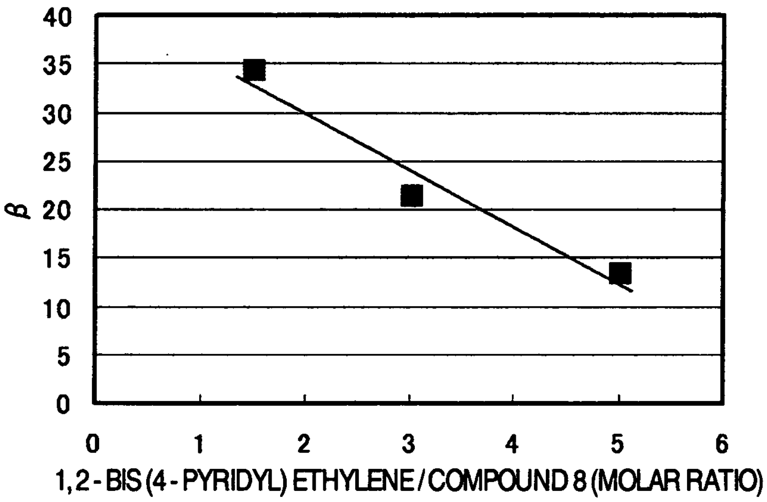


FIG.3

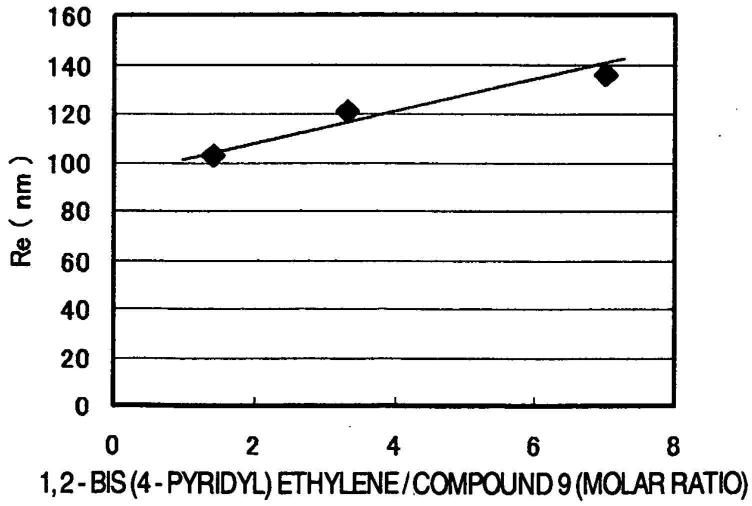

FIG.4

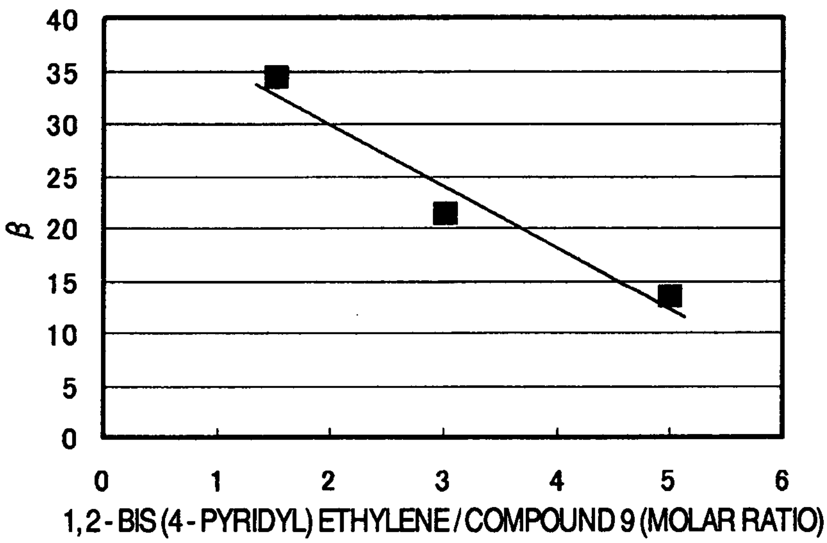
40
35
30
25
β 20
15
10
5
0
0 1 2 3 4 5 6
1,2-BIS(4-PYRIDYL) ETHYLENE/COMPOUND 9 (MOLAR RATIO)

FIG.5

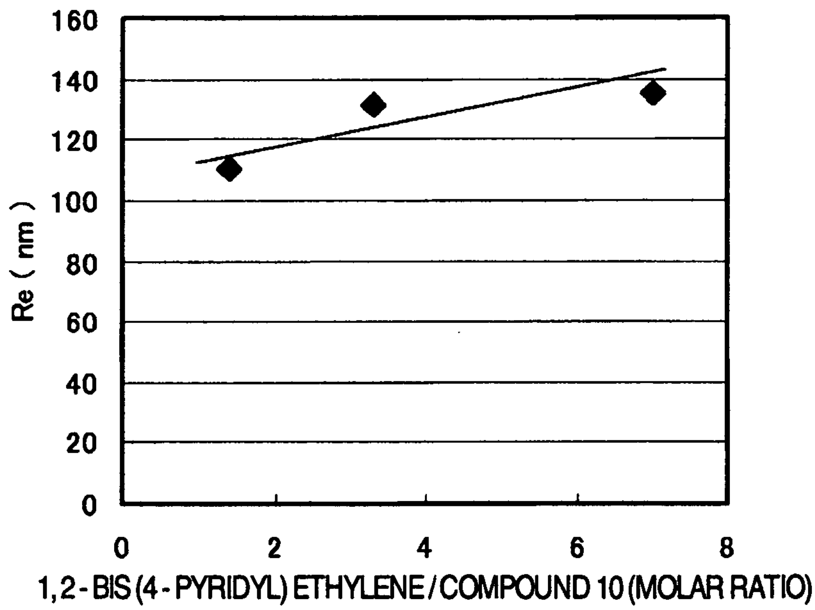
160
140
120
100
Re ( nm )
80
60
40
20
0
0 2 4 6 8
1,2-BIS(4-PYRIDYL) ETHYLENE/COMPOUND 10 (MOLAR RATIO)

FIG.6

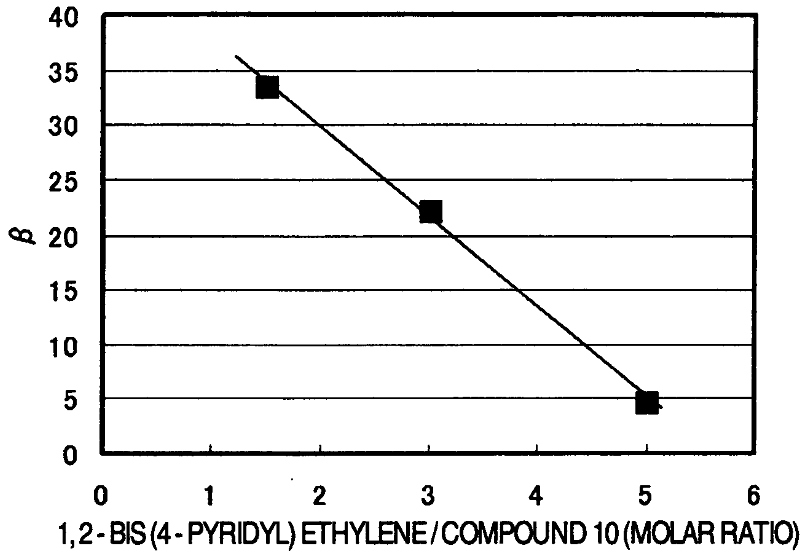


FIG.7

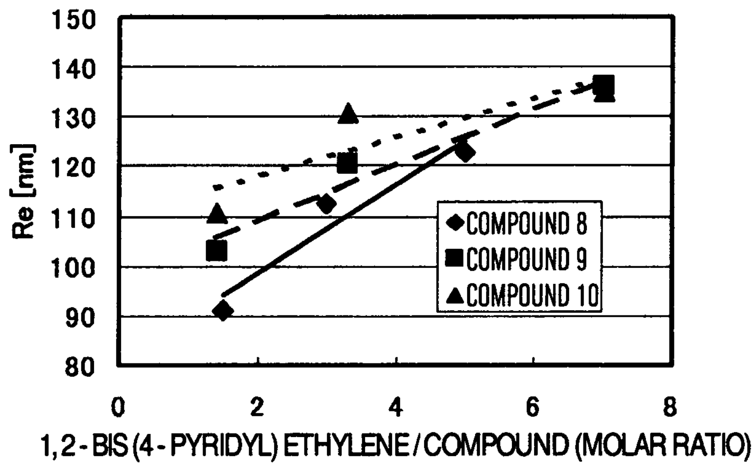


FIG.8

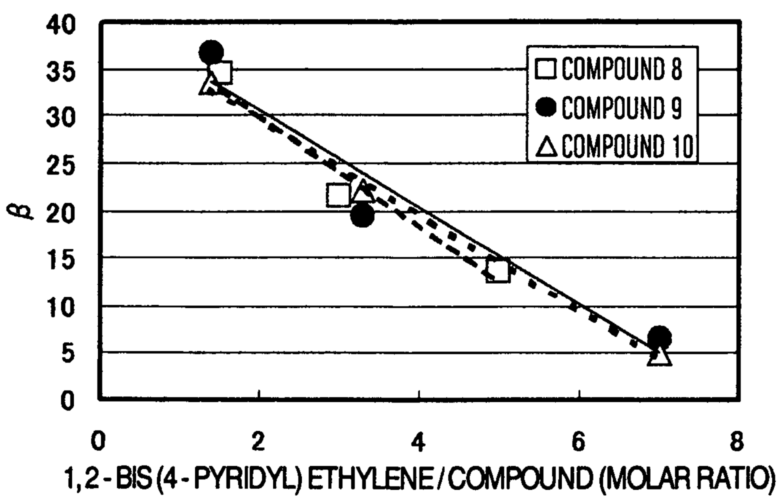

FIG.9

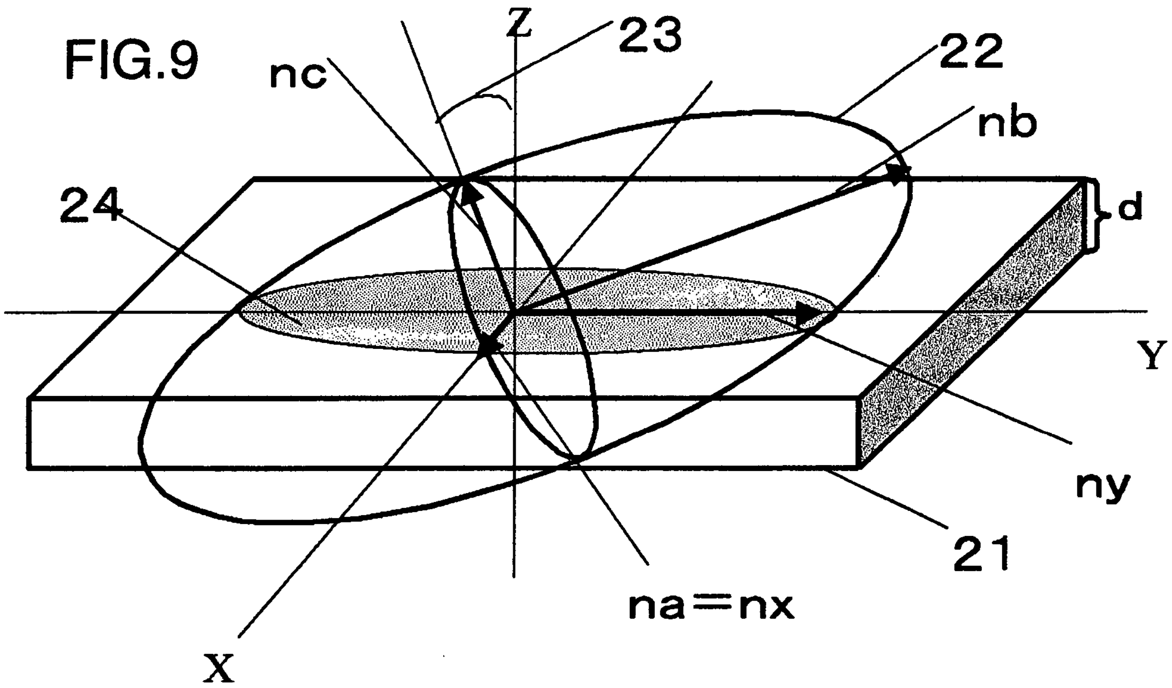


FIG.10

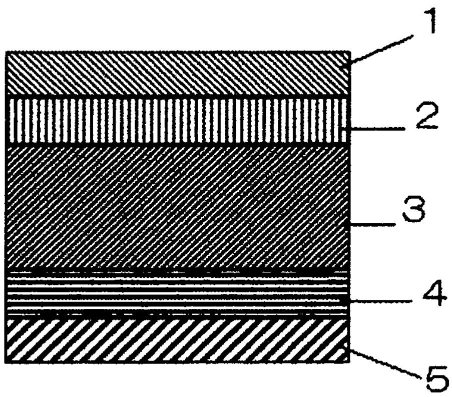


FIG.11

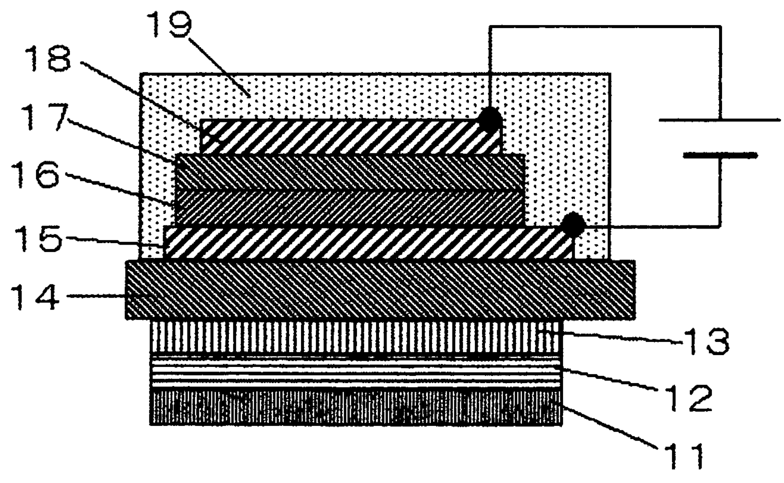

## INTERNATIONAL SEARCH REPORT

International application No.
PCT/JP2007/055095

A. CLASSIFICATION OF SUBJECT MATTER
*G02B5/30*(2006.01)i, *G02F1/13363*(2006.01)i

According to International Patent Classification (IPC) or to both national classification and IPC

B. FIELDS SEARCHED

Minimum documentation searched (classification system followed by classification symbols)
G02B5/30, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-60619 A (JSR Corp.), 02 March, 1999 (02.03.99), Par. Nos. [0004] to [0032], [0035] & US 6139772 A & EP 896047 A1 | 1-12 |
| X | WO 88/00606 A1 (Idemitsu Kosan Co., Ltd.), 28 January, 1988 (28.01.88), Page 2, line 12 to page 7, line 16 & US 4915867 A & EP 277241 A1 & DE 3788055 D | 1-12 |
| X | JP 2006-91509 A (Fuji Photo Film Co., Ltd.), 06 April, 2006 (06.04.06), Claims 1, Par. No. [0016] (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 May, 2007 (01.05.07) | 22 May, 2007 (22.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/055095

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-161132 A (NEC Corp.), 19 June, 1998 (19.06.98), Full text; all drawings (Family: none) | 1-12 |
| A | JP 2003-238962 A (Takashi KATO), 27 August, 2003 (27.08.03), Full text; all drawings & 2003-160213 A1 & EP 1338639 A1 | 1-12 |
| A | JP 2004-175881 A (Takashi KATO), 24 June, 2004 (24.06.04), Full text; all drawings & US 2004-99841 A | 1-12 |
| A | JP 2005-281504 A (Takashi KATO), 13 October, 2005 (13.10.05), Full text; all drawings & US 2005-218374 A1 & EP 1586618 A1 | 1-12 |
| P,X | WO 2006/118073 A1 (Sumitomo Chemical Co., Ltd.), 09 November, 2006 (09.11.06), Claims 1 to 17 & JP 2006-330710 A | 1-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001139950 A